# EUROPEAN PATENT SPECIFICATION

(11) **EP 2 679 364 B1**
(45) Date of publication and mention of the grant of the patent: **20.04.2016**
(21) Application number: 12776681.4
(22) Date of filing: 29.02.2012
(51) Int. Cl.: B28D 5/04

(54) **DIAMOND WIRE SAW DEVICE**
DIAMANTDRAHT-SÄGEVORRICHTUNG
DISPOSITIF DE SCIE À FIL DIAMANTÉ

(30) Priority: 29.04.2011 CN 201110112869
(43) Date of publication of application: 01.01.2014
(73) Proprietor: Guilin Champion Union Diamond Co., Ltd, Guilin, Guangxi 541004 (CN)
(72) Inventor: SONG, Jingxin, Guilin Guangxi 541004 (CN)
(74) Representative: Hryszkiewicz, Danuta
(86) International application number: PCT/CN2012/071788
(87) International publication number: WO 2012/146084

(56) References cited:
- WO-A1-01/91981
- CN-A- 1 953 835
- CN-A- 102 225 593
- CN-U- 202 029 257
- DE-A1-102008 030 826
- DE-U1-202008 008 720
- JP-A- 2009 274 167

## Description

The invention relates to a processing device for hard and brittle non-metallic materials and more particularly to a diamond wire saw device for cutting silicon ingots, as per the preamble of claim 1. Such a diamond wire saw device is known from DE 20 2008 008 720 U1.

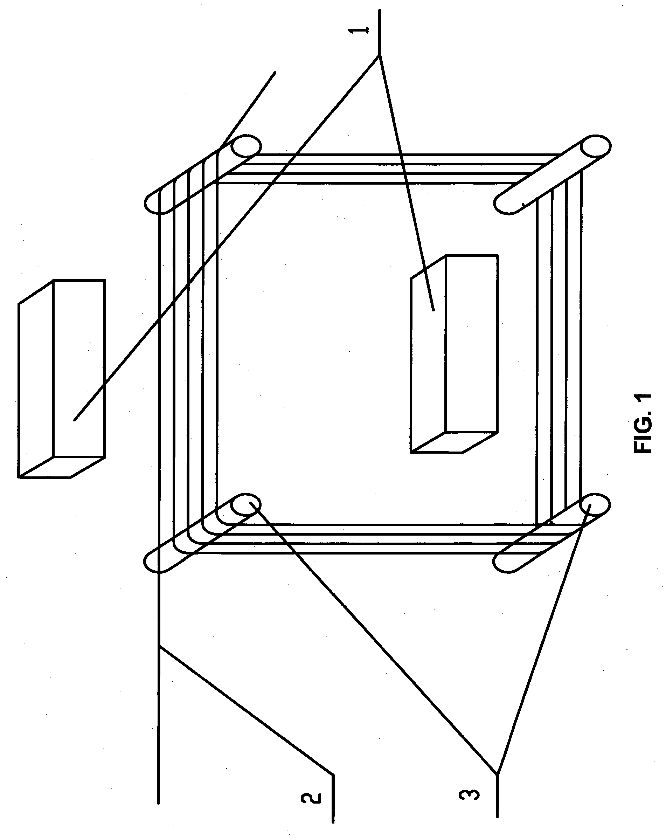

Cutting the solid silicon ingots of monocrystalline silicon or polycrystalline silicon is a critical process for the manufacture of solar photovoltaic cells. The silicon ingots are cut into square blocks, and then cut into thin silicon wafers. A multi-wire saw is the most common and the most mature slicing equipment at present. A group of parallel spools is arranged in the working area of the multi-wire saw, sawing wires parallel to one another are wound on the spools to form a square cutting wire mesh (as shown in FIG. 1) running at a certain linear speed. An upper horizontal wire mesh surface and a lower horizontal wire mesh surface of the cutting wire mesh are silicon ingot cutting surfaces. The silicon ingots are fixed on a cutting table. The cutting table vertically penetrates the upper horizontal wire mesh surface and the lower horizontal wire mesh surface, and the multi-wire saw provides free abrasives of abrasive slurry for the sawing wire during cutting so that the silicon ingots are cut into silicon wafers.

The cutting method of a wire saw machine has been greatly improved technically compared with a traditional band saw cutting method and ID blades slicing cutting method, but there are still a lot problems such as surface cracks of surface cutting by abrasive slurry, uncontrollable depth of the affected layer, difficulty in separation between abrasive particles and silicon powder scraps, harsh working environment, and lower efficiency.

The cutting method of diamond wire saw with micro abrasive concretion is a new processing method proposed for solving the above problems. From the present research achievements, the diamond wire saw with abrasive concretion has the advantages of ease in recovery of silicon crumbs, good working environment, and small damage of the cutting surface, high efficiency, thin slicing, thickness equalization and the like.

The abrasive particles concretion method of the diamond wire saw mainly includes: (1) fixing with resin bond (including metal and non-metal core wires); (2) fixing by mechanical extrusion (metal core wire); (3) fixing by brazing (metal core wire); (4) fixing with electroplated abrasive (metal core wire). Each diamond wire saw with abrasive concretion has different characteristics, but also has obvious defects.

(1) As to the resin bond diamond wire saw with abrasive concretion, the finishing surface quality is good, but the efficiency is low, the resin heat resistance is poor, the bonding strength is low, the wire diameter of the wire saw is easily worn, the change in kerf is great, and the subsequent processing cost may be increased due to the out-of-tolerance in thickness of the silicon wafer.

(2) As to the diamond wire saw with abrasive concretion by mechanical extrusion, the working efficiency is high, but the core wire is damaged under extrusion, the service life is affected after the strength degradation, and the finishing quality of surface is difficult to guarantee.

(3) As to the diamond wire saw with abrasive concretion by brazing (metal core wire), the working efficiency is high, but the strength and toughness of the core wire are destroyed due to the high temperature during the brazing process, the manufacturing process is complex, and the difficulty in volume production is high.

(4) As to the diamond wire saw with abrasive concretion by electroplated abrasive (metal core wire), the retention of wire diameter is good, but the finishing quality is not satisfying, and the wire saw is easily broken to lead to higher cutting cost.

In China, the above four categories of products have been partially applied on slicing of silicon materials bricking, but are not yet widely used. Its main reason lies in that the diamond multi-wire saw performs one-time cutting to the silicon ingot by adopting the same wire, it's difficult to meet the index requirements of surface finishing quality, efficiency, service life, and cost performance of the silicon wafer at the same time, and in addition, the performance of the matching equipment are also unsatisfactory.

The purpose of the invention is to provide a diamond wire saw device for meeting the index requirements of surface finishing quality, efficiency, service life, and cost performance of silicon wafers through multi-cutting with diamond wire saws with different characteristics during silicon wafering.

The diamond wire saw device capable of realizing the above purpose comprises the combination of features of independent claim 1. Preferred embodiments of the invention are disclosed in the dependent claims.

Preferably the cutting mesh surface is formed by winding one or more long diamond sawing wires on one group of spool.

Preferably in one group of spools, a square mesh surface is formed by at least two spools, a triangular mesh surface is formed by three spools, or a polygonal mesh surface is formed by more spools.

Conventionally, four spools are arranged in the four corners to form a square wire mesh. The number of the square wire mesh is two groups or more, and each group of the square wire meshes is combined to form a two-layer or multi-layer cutting mesh surface.

A two-layer or three-layer cutting mesh surface is taken as an example:

Two groups of the square wire meshes are nested to form a concentric hollow square, or two groups of the square wire meshes are distributed in the front and in the back along the cutting feed direction.

Three groups of the square wire meshes are nested with one another; or a group of the square wire meshes are distributed in front of or behind two groups of the square wire meshes nested to form a concentric hollow square along the cutting feed direction.

The relationship between the adjacent diamond sawing wires or between the adjacent cutting mesh surfaces is parallel, and to better eliminate the cut marks formed on the surface of the silicon wafer during the former cutting of the diamond sawing wire, an included angle can be formed between the adjacent diamond sawing wires or the adjacent cutting mesh surfaces.

When the strength of the silicon wafer is sufficient, the running directions of the adjacent diamond sawing wires or the adjacent cutting mesh surfaces can be the same, however, the running directions are preferably opposite for keeping the cutting stability.

According to the fundamental principles of diamond processing, the grain size of diamond plays a decisive role for the cutting efficiency and surface roughness, and the cutting efficiency can be improved by adopting the more coarse diamond, however, the surface roughness is poorer; a better surface roughness can be obtained by adopting the finer diamond, however, the cutting efficiency is greatly affected. Thus, all diamond sawing wires can independently run with different parameters, for the purposes of cutting, fine grinding, and polishing of different diamond sawing wires to the silicon wafer. By adopting the technical scheme of the diamond wire saw device, the diamond sawing wires corresponding to the process are selectively used in different cutting wire meshes according to the different demands of cutting, coarse grinding, and fine grinding, so that the wire diameter and the grain size of diamond are appropriate to the process, not only the cutting efficiency is improved, but also the requirements of surface roughness are met, and the cut silicon wafers are further developed towards the bigger and thinner silicon wafers.

Advantages of the invention are summarized below:

By adopting the method of cutting the silicon wafers in sequence via the cutting mesh surfaces of a plurality of groups of diamond sawing wires, the cutting, fine grinding, and polishing procedures of the silicon wafer are finished via the diamond sawing wires with different characteristics according to different working parameters; the machining allowance of cutting, fine grinding, and polishing is greatly lowered in sequence, and the shearing force to the silicon wafer during the processing is greatly reduced in sequence, so as to be favorable for the formation of thin sheets, thus the higher utilization ratio of silicon materials is obtained, the requirements of developing the narrower cutting seams and the thinner cut silicon wafers is met, the problem that the requirements of the grain size of diamond to the cutting efficiency and the surface roughness cannot be met at the same time is solved, and the selection of the grain size of diamond is wider.
FIG. 1 is a three-dimensional structural diagram of a group of square wire meshes formed by winding a diamond sawing wire on a group (four) of spools in a traditional diamond wire saw machine;
FIG. 2 is a front view of FIG. 1;
FIG. 3 is a structural diagram of a first example of a diamond wire saw device;
FIG. 4 is a structural diagram of a second example of a diamond wire saw device;
FIG. 5 is a structural diagram of a third example of a diamond wire saw device;
FIG. 6 is a structural diagram of a fourth example of a diamond wire saw device;
FIG. 7 is a structural diagram of a fifth example of a diamond wire saw device; and
FIG. 8 is a diagram illustrating the cutting, fine grinding, and polishing of three different diamond sawing wires in the same silicon slit in FIG. 3, FIG. 4, and FIG. 5.

Legends: 1. Cutting table 1 for fixing silicon rod; 2. Diamond sawing wire; 3. Spool.

The technical scheme of a diamond wire saw device is described by taking a three-layer cutting mesh surface and a two-layer cutting mesh surface as examples.

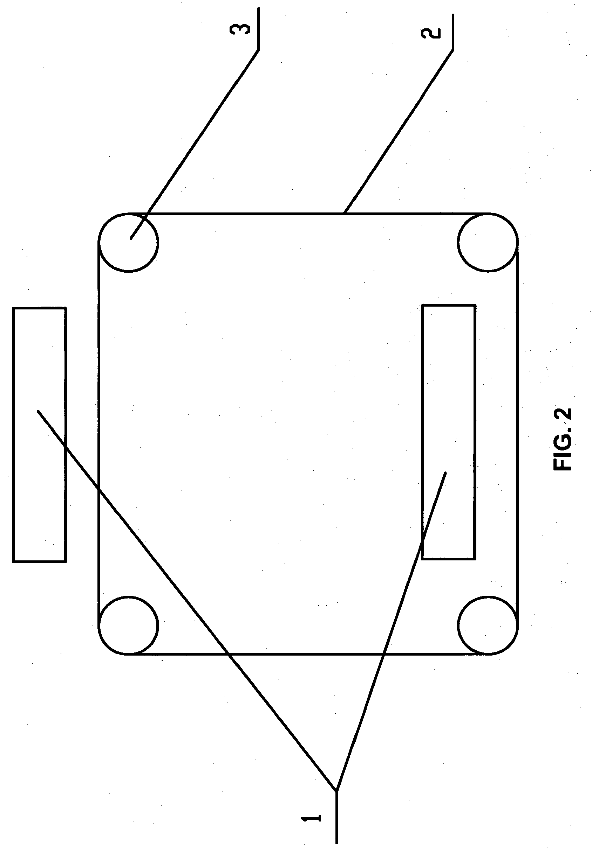

1. In the silicon wafer cutting process of a three-layer cutting mesh surface, three vertically aligned diamond sawing wires 2 are used for cutting, finely grinding, and polishing the same silicon slit. Each layer of the cutting mesh surface comprises mesh surfaces of a group of wire meshes formed by winding long diamond sawing wires 2 on a group of spools 3; each group of the spools 3 are arranged in the four corners to form a square wire mesh. As shown in FIG. 1 and FIG. 2, the upper mesh surface and the lower mesh surface in the square wire mesh corresponding to a cutting table 1 for fixing silicon rods are cutting mesh surfaces.

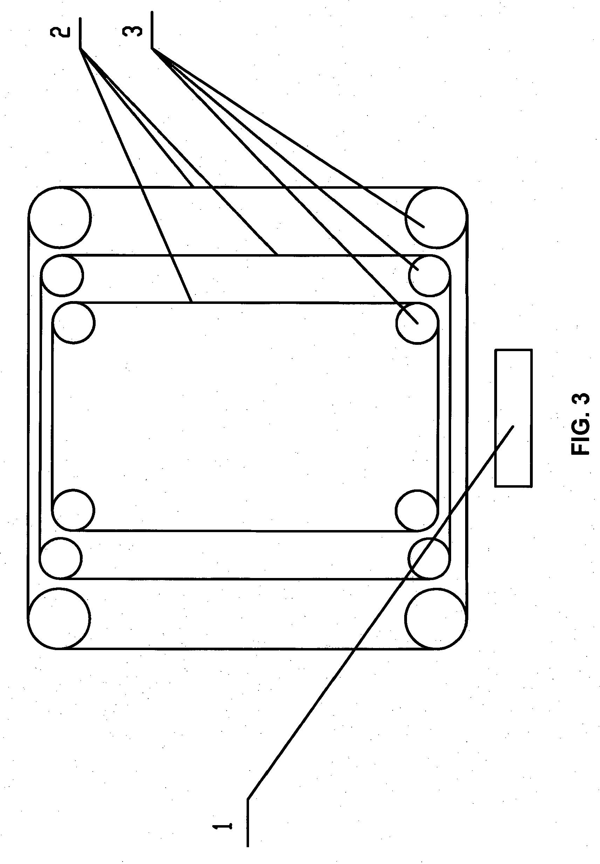

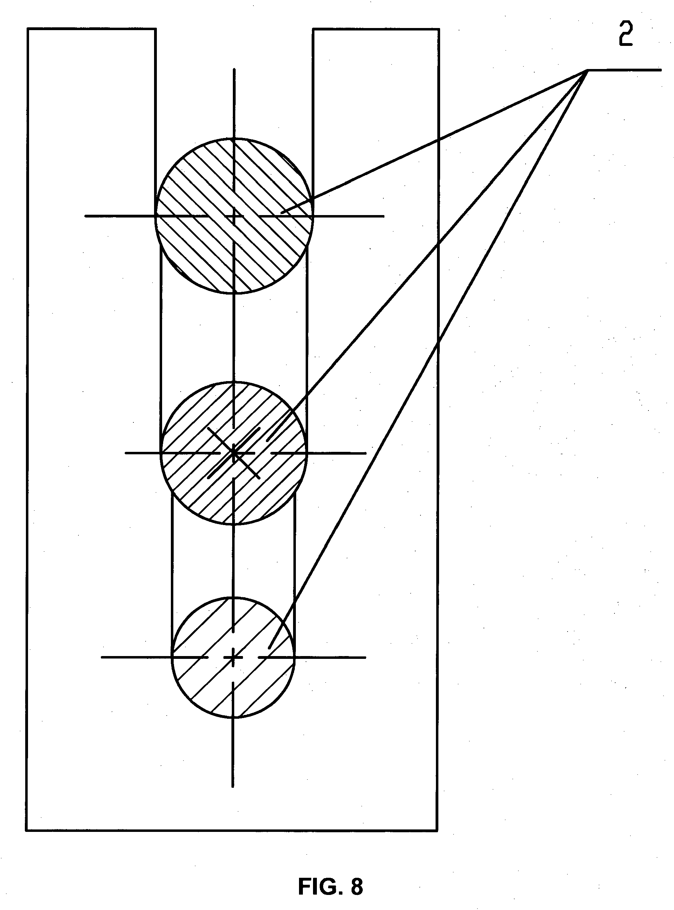

A. The three-layer cutting mesh surface comprises mesh surfaces of three groups of wire meshes formed by winding three diamond sawing wires 2 on three groups of spools 3. As shown in FIG. 3 and FIG. 8, the three-layer cutting mesh surface is formed by three lower diamond sawing wires 2. The cutting table 1 for fixing silicon rods is arranged below the three-layer cutting mesh surface. The operation of cutting, fine grinding, and polishing is carried out in sequence from outside to inside.

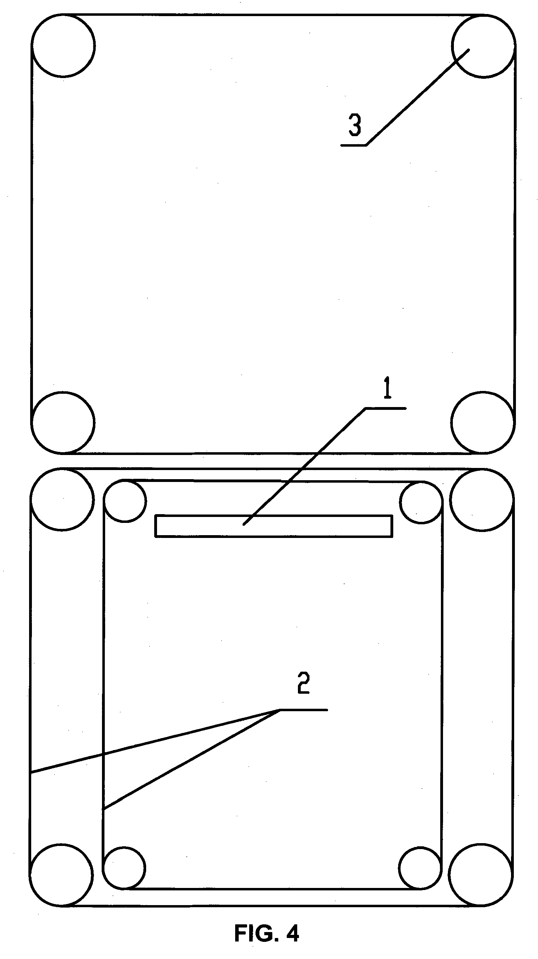

B. The three-layer cutting mesh surface comprises mesh surfaces of three groups of wire meshes formed by winding three diamond sawing wires 2 on three groups of spools 3. Two groups of wire meshes are mutually nested to form a concentric hollow square, and a square wire mesh is positioned above the wire meshes with a concentric hollow square. As shown in FIG. 4 and FIG. 8, the three-layer cutting mesh surface is formed by a lower diamond sawing wire 2 of the square wire mesh and two upper diamond sawing wires 2 of the wire meshes with a concentric hollow square. The cutting table 1 for fixing silicon rods is arranged below the three-layer cutting mesh surface. The operation of cutting, fine grinding, and polishing is carried out in sequence from inside to outside of the wire meshes with a concentric hollow square, and then gets through the lower diamond sawing wire 2 of the square wire mesh.

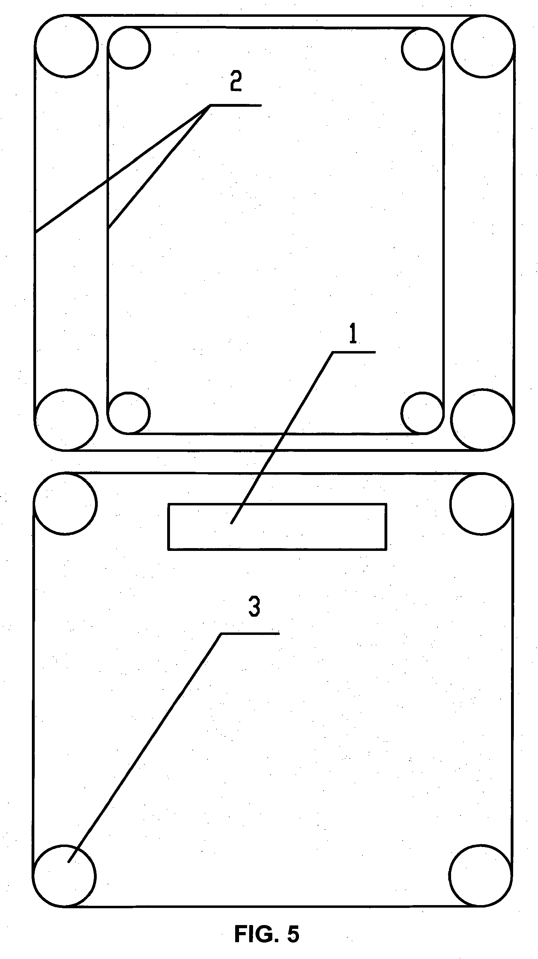

C. The three-layer cutting mesh surface comprises mesh surfaces of three groups of wire meshes formed by winding three diamond sawing wires 2 on three groups of spools 3. Two groups of wire meshes are mutually nested to form a concentric hollow square, and a square wire mesh is positioned below the wire meshes with a concentric hollow square. As shown in FIG. 5 and FIG. 8, the three-layer cutting mesh surface is formed by two lower diamond sawing wires 2 of the wire meshes with a concentric hollow square and an upper diamond sawing wire 2 of the square wire mesh. The cutting table 1 for fixing silicon rods is arranged below the three-layer cutting mesh surface. The operation of cutting, fine grinding, and polishing is carried out in sequence from outside to inside of the wire meshes with a concentric hollow square after getting through the upper diamond sawing wire 2 of the square wire mesh.

In A, B, and C, the diameter of the diamond sawing wire 2 of each layer of cutting mesh surface is gradually increased according to the cutting sequence, the wire diameter of the diamond sawing wire 2 is gradually thickened, and the size of diamond grains attached on the wire diameter of the diamond sawing wire 2 is gradually reduced.

2. In the silicon wafer cutting process of a two-layer cutting mesh surface, two vertically aligned diamond sawing wires are used for cutting and grinding the same silicon slit; each layer of cutting mesh surface comprises mesh surfaces of a group of wire meshes formed by winding a diamond sawing wire 2 on a group of spools 3; each group of the spools 3 is arranged in the four corners to form a square wire mesh. As shown in FIG. 1 and FIG. 2, the upper mesh surface and the lower mesh surface corresponding to the cutting table 1 for fixing silicon rods are cutting mesh surfaces.

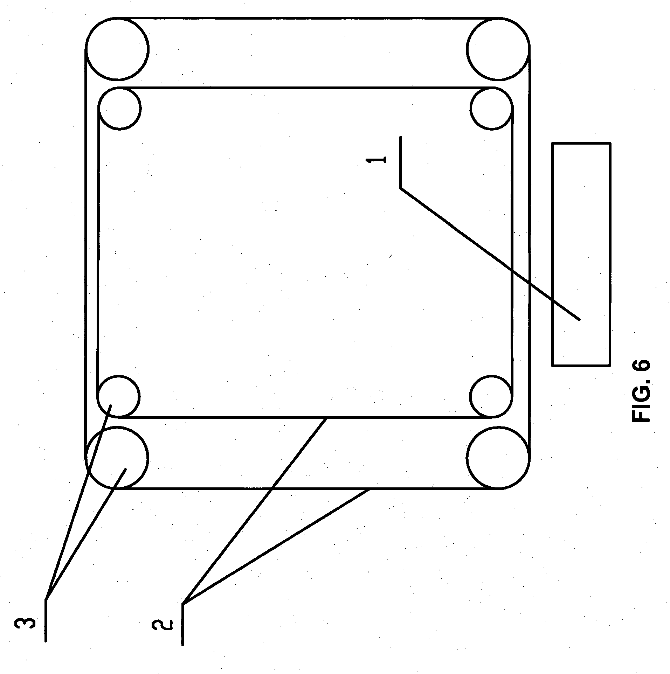

D. The two-layer cutting mesh surface comprises mesh surfaces of two groups of wire meshes formed by winding two diamond sawing wires 2 on two groups of spools 3; the two groups of the wire meshes are mutually nested to form a concentric hollow square. As shown in FIG. 6, the two-layer cutting mesh surface is formed by two lower diamond sawing wires 2. The cutting table 1 for fixing silicon rods is arranged below the two-layer cutting mesh surface. The operation of cutting and grinding is carried out in sequence from outside to inside.

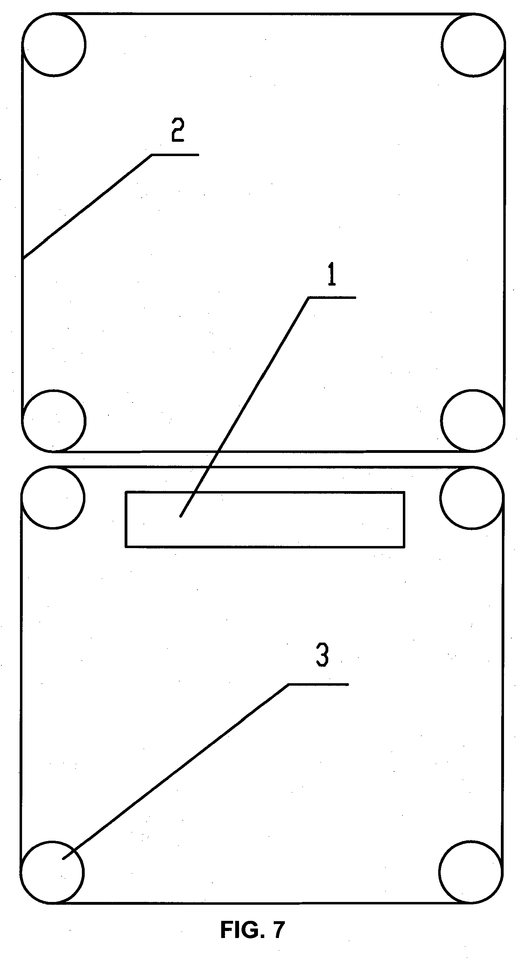

E. The two-layer cutting mesh surface comprises mesh surfaces of two groups of wire meshes formed by winding two diamond sawing wires 2 on two groups of spools 3; the two groups of the wire meshes are vertically arranged to form an upper square wire mesh and a lower square wire mesh. As shown in FIG. 7, the two-layer cutting mesh surface is formed by a lower diamond sawing wire 2 of the upper square wire mesh and an upper diamond sawing wire 2 of the lower square wire mesh. The cutting table 1 is arranged below the two-layer cutting mesh surface. The operation of cutting and grinding is carried out in sequence from the upper diamond sawing wire 2 of the lower square wire mesh to the lower diamond sawing wire 2 of the upper square wire mesh.

In D and E, the diameter of the diamond sawing wire 2 of the first layer of the cutting mesh surface is gradually increased, the wire diameter of the diamond sawing wire 2 of the second layer of the cutting mesh surface is greater than that of the diamond sawing wire 2 of the first layer of the cutting mesh surface, and the size of diamond grains attached on the wire diameter of the diamond sawing wire 2 of the second layer of the cutting mesh surface is smaller than that of diamond grains attached on the wire diameter of the diamond sawing wire 2 of the first layer of the cutting mesh surface.

In A, B, C, D, and E, a certain included angle is formed between the adjacent cutting mesh surfaces and the running direction of the adjacent cutting mesh surfaces are opposite.

While particular embodiments of the invention have been shown and described, it will be obvious to those skilled in the art that changes and modifications may be made without departing from the scope of the appended claims.

## Claims

1. A diamond wire saw device, comprising: at least two diamond sawing wires (2) or at least two groups of the diamond sawing wires (2), the at least two diamond sawing wires being arranged in the front and back of a cutting working surface along a cutting feed direction, or the at least two groups of the diamond sawing wires (2) being arranged in the front and back of more than one parallel cutting working surface; the diamond sawing wires (2) in the same group being parallel to one another to form a layer of cutting mesh surface;
**characterized in that**
the diameter of a former diamond sawing wire or a former group of diamond sawing wires (2) is smaller than that of a latter diamond sawing wire (2) or a latter group of diamond sawing wires (2);
the wire diameter of the former diamond sawing wire or the former group of diamond sawing wires (2) is smaller than that of the latter diamond sawing wire or the latter group of diamond sawing wires (2); and
the size of diamond grains attached onto the former diamond sawing wire or the former group of diamond sawing wires (2) is larger than that of diamond grains attached onto the latter diamond sawing wire or the latter group of diamond sawing wires

2. The diamond wire saw device of claim 1, **characterized in that** the cutting mesh surface is formed by winding one or more long diamond sawing wires (2) on one group of spools (3).

3. The diamond wire saw device of claim 2, **characterized in that** in one group of spools (3), a square mesh surface is formed by at least two spools (3), a triangular mesh surface is formed by three spools (3), or a polygonal mesh surface is formed by more spools (3).

4. The diamond wire saw device of claim 3, **characterized in that** four spools (3) are arranged in four corners to form a square wire mesh.

5. The diamond wire saw device of claim 4, **characterized in that** the square wire mesh is two or more groups in number, and each group of the square wire meshes is combined to form a two-layer or multi-layer cutting mesh surface.

6. The diamond wire saw device of claim 5, **characterized in that** two groups of the square wire meshes are nested to form a concentric hollow square, or two groups of the square wire meshes are distributed in the front and in the back along the cutting feed direction.

7. The diamond wire saw device of claim 5, **characterized in that** three groups of the square wire meshes are nested with one another; or a group of the square wire meshes are distributed in front of or
behind two groups of the square wire meshes which are nested to form a concentric hollow square along the cutting feed direction.

8. The diamond wire saw device of any of claims 1-7, **characterized in that** an included angle is formed between adjacent diamond sawing wires (2) or adjacent cutting mesh surfaces.

9. The diamond wire saw device of any of claims 1-7, **characterized in that** the running directions of adjacent diamond sawing wires (2) or adjacent cutting mesh surfaces is the same or opposite.

## Patentansprüche

1. Diamantdrahtsägevorrichtung, umfassend: wenigstens zwei Diamantsägedrähte (2) oder wenigstens zwei Gruppen der Diamantsägedrähte (2), wobei die wenigstens zwei Diamantsägedrähte vorne und hinten auf einer schneidenden Arbeitsoberfläche entlang einer Schneidevorschubrichtung angeordnet sind, oder die wenigstens zwei Gruppen der Diamantsägedrähte (2) vorne und hinten auf mehr als einer parallelen Schneidearbeitsoberfläche angeordnet sind; wobei die Diamantsägedrähte (2) in derselben Gruppe parallel zueinander sind, um eine Schicht einer Schneidenetzoberfläche zu bilden;
**dadurch gekennzeichnet, dass**
der Durchmesser eines ersten Diamantsägedrahtes oder einer ersten Gruppe von Diamantsägedrähten (2) kleiner als derjenige eines letzteren Diamantsägedrahtes (2) oder einer letzteren Gruppe von Diamantsägedrähten (2) ist;
der Drahtdurchmesser des ersten Diamantsägedrahtes oder der ersten Gruppe von Diamantsägedrähten (2) kleiner als derjenige des letzteren Diamantsägedrahtes oder der letzteren Gruppe von Diamantsägedrähten (2) ist; und
die Größe der Diamantkörnchen, die an dem ersten Diamantsägedraht oder der ersten Gruppe von Diamantsägedrähten (2) angebracht sind, größer als diejenige der Diamantkörnchen ist, die an dem letzteren Diamantsägedraht oder der letzteren Gruppe von Diamantsägedrähte (2) angebracht ist.

2. Diamantdrahtsägevorrichtung nach Anspruch 1, **dadurch gekennzeichnet, dass** die Oberfläche des Schneidenetzes durch das Winden eines oder mehrerer langer Diamantsägedrähte (2) auf eine Spulengruppe (3) gebildet wird.

3. Diamantdrahtsägevorrichtung nach Anspruch 2, **dadurch gekennzeichnet, dass** in einer Spulengruppe (3) eine quadratische Netzoberfläche durch wenigstens zwei Spulen (3) gebildet wird, eine dreieckige Netzoberfläche durch drei Spulen (3) gebildet wird, oder eine polygonale Netzoberfläche durch mehrere Spulen (3) gebildet wird.

4. Diamantdrahtsägevorrichtung nach Anspruch 3, **dadurch gekennzeichnet, dass** vier Spulen (3) in vier Ecken angeordnet sind, um ein quadratisches Drahtnetz zu bilden.

5. Diamantdrahtsägevorrichtung nach Anspruch 4, **dadurch gekennzeichnet, dass** das quadratische Drahtnetz aus zwei oder mehreren Gruppen besteht, und jede Gruppe dieses quadratischen Drahtnetzes kombiniert ist, um eine zweischichtige oder mehrschichtige Schneidenetzoberfläche zu bilden.

6. Diamantdrahtsägevorrichtung nach Anspruch 5, **dadurch gekennzeichnet, dass** zwei Gruppen des quadratischen Drahtnetzes verschachtelt sind, um ein konzentrisches hohles Quadrat zu bilden, oder zwei Gruppen der quadratischen Drahtnetze vorne und hinten entlang der Vorschubrichtung verteilt sind.

7. Diamantdrahtsägevorrichtung nach Anspruch 5, **dadurch gekennzeichnet, dass** drei Gruppen der quadratischen Drahtnetze miteinander verschachtelt sind, oder eine Gruppe der quadratischen Drahtnetze vor oder hinter zwei Gruppen von quadratischen Drahtnetzen verteilt sind, die verschachtelt sind, um ein konzentrisches hohles Quadrat entlang der Vorschubrichtung zu bilden.

8. Diamantdrahtsägevorrichtung nach einem der Ansprüche 1 - 7, **dadurch gekennzeichnet, dass** ein Eckenwinkel zwischen anliegenden Diamantsägedrähten (2) oder anliegenden Schneidenetzoberflächen gebildet wird.

9. Diamantdrahtsägevorrichtung nach einem der Ansprüche 1 - 7, **dadurch gekennzeichnet, dass** die Laufrichtungen der anliegenden Diamantsägedrähte (2) oder anliegenden Schneidenetzoberflächen gleich oder gegenläufig sind.

## Revendications

1. Dispositif de sciage au fil du diamant, comprenant: au moiçns deux fils de sciage de diamant (2) d'au moins deux groups de fils de sciage de diamant (2), les au moins deux fils de sciage de diamant étant disposés à l'avant et à l'arrière d'une surface d'usinage de coupe le long d'une direction d'alimentation de coupe, ou les au moins deux groupes de fils de sciage de diamant (2) étant disposés à l'avant et à l'arrière de plus d'une surface d'usinage de coupe parallèle ; les fils de sciage de diamant (2) dans le même groupe étant parallèles l'un à l'autre afin de former une couche de surface de maille de coupe ;
**caractérisé en ce que**
le diamètre d'un premier fil de sciage de dimant ou d'un premier groupe de fils de sciage de diamant (2) est plus petit que celui d'un dernier fil de sciage de diamant (2) ou d'un dernier groupe de fils de sciage de diamant (2) ;
le diamètre de fil du premier fil de sciage de diamant ou du premier groupe de fils d sciage de diamant (2) est plus petit que celui du dernier fil de sciage de diamant ou du dernier groupe de fils de sciage de diamant (2) ; et
la taille des grains de diamant fixés sur le premier fil de sciage de diamant ou le premier groupe de fils de sciage de diamant (2) est plus grand que celui des grains d diamant fixés sur le dernier fil de sciage de diamant ou le dernier groupe de fils de sciage de diamant (2).

2. Dispositif de sciage au fil du diamant selon la revendication 1, **caractérisé en ce que** la surface de maille de coupe est formée en enroulant un ou plusieurs longs fils de sciage de diamant (2) sur un groupe de bobines (3).

3. Dispositif de sciage au fil du diamant selon la revendication 2, **caractérisé en ce que** dans un groupe de bobines (3), une surface de maille carrée est formée par au moins deux bobines (3), une surface de maille triangulaire est formée par trois bobines (3) ou une surface de maille polygonale est formée par plusieurs bobines (3).

4. Dispositif de sciage au fil du diamant selon la revendication 3, **caractérisé en ce que** quatre bobines (3) sont disposées dans quatre coins afin de former une maille de fil carrée.

5. Dispositif de sciage au fil du diamant selon la revendication 4, **caractérisé en ce que** la maille de fil carrée est au nombre de deux ou plus groupes, et chaque groupe de mailles de fils carrées est combiné afin de former une surface de maille de coupe à deux couches ou multi-couches.

6. Dispositif de sciage au fil du diamant selon la revendication 5, **caractérisé en ce que** deux groupes de mailles de fils carrées sont nichés afin de former un carré creux concentrique, ou deux groupes de mailles de fils carrées sont distribuées à l'avant et à l'arrière le long de la direction d'alimentation de coupe.

7. Dispositif de sciage au fil du diamant selon la revendication 5, **caractérisé en ce que** trois groupes des mailles de fils carrées sont nichés l'un avec l'autre, ou un groupe de mailles de fils carrées sont distribués à l'avant ou à l'arrière de deux groupes de mailles de fils carrées qui sont nichés afin de former un carré creux concentrique le long de la direction d'alimentation de coupe.

8. Dispositif de sciage au fil du diamant selon une quelconque des revendications 1 - 7, **caractérisé en ce que** un angle inclus est formé entre des fils de sciage de diamant adjacents (2) ou des surfaces de maille de coupe adjacentes.

9. Dispositif de sciage au fil du diamant selon une quelconque des revendications 1 - 7, **caractérisé en ce que** les directions d'avance des fils de sciage de diamant adjacents (2) ou des surfaces de maille de coupe adjacentes sont les mêmes ou opposées.
